Europäisches Patentamt

(19) European Patent Office

Office européen des brevets

(11) Numéro de publication: **0 010 472**
A2

## (12) DEMANDE DE BREVET EUROPEEN

(21) Numéro de dépôt: **79400699.9**

(22) Date de dépôt: **03.10.79**

(51) Int. Cl.³: **C 04 B 7/24**
C 04 B 13/00, C 09 K 17/00

(30) Priorité: **24.10.78 FR 7830140**
**12.04.79 FR 7909264**

(43) Date de publication de la demande:
**30.04.80 Bulletin 80 9**

(84) Etats Contractants Désignés:
**BE CH DE GB IT NL**

(71) Demandeur: **Couturier, Jean**
**7, rue de l'Ermitage**
**F-78000 Versailles(FR)**

(72) Inventeur: **Couturier, Jean**
**7, rue de l'Ermitage**
**F-78000 Versailles(FR)**

(74) Mandataire: **Cuer, André**
**CABINET CUER 30, rue de Léningrad**
**F-75008 Paris(FR)**

(54) Liant hydraulique et son application.

(57) Le nouveau liant est constitué essentiellement par un mélange: a) de résidus de traitement de minerais riches en silico-aluminate de sodium et en oxydes de fer, comme par exemple les boues rouges rejetées après fabrication de l'alumine à partir de bauxite; et b) de chaux libre ou produit en renfermant, tel que notamment des cendres volantes sulfo-calciques de centrale thermique contenant de la chaux libre. On peut aussi ajouter au mélange un agent activant de prise, du laitier granulé métallurgique ou sidérurgique et, si désiré, des matériaux de remplissage constitués eax-mêmes par des résidus comme par exemple des boues de papeterie.
Application du liant à la fabrication de matériaux de constructions, à la réalisation de chaussées, à la stabilisation de sols et usages analogues.

TITRE MODIFIÉ
voir page de garde

## Liant Hydraulique.

La présente invention a trait à un nouveau liant hydraulique de faible coût, à prise lente et progressive, apte à conférer aux matériaux dans lesquels il est incorporé une excellente cohésion et des caractéristiques mécaniques élevées.

Les liants hydrauliques conventionnels tels que chaux, ciments, laitiers de haut-fourneaux ou d'acieries permettent généralement d'obtenir des cohésions finales correctes lors des travaux de construction, génie civil ou autres mais donnent lieu fréquemment à des défauts provenant
notamment soit d'une prise rapide qui se manifeste ensuite par des fissurations importantes soit d'une prise trop lente qui ne permet pas l'obtention
d'un durcissement adéquat, en particulier en cas d'intempéries pendant ou
après la mise en oeuvre. En outre, l'élaboration de ces liants est coûteuse
et exige une dépense d'énergie importante.

L'invention vise un liant hydraulique dont la fabrication
s'effectue à froid par simple malaxage de constituants et qui permet d'obtenir des résistances à la traction (Rt) et à la compression (Rc) nettement
supérieures à celles des liants hydrauliques classiques. Elle permet en outre de récupérer des sous-produits de fabrication considérés comme des agents
de pollution et constitue de ce fait un intéressant moyen de valorisation
de déchets nocifs et encombrants.

Le liant selon l'invention est essentiellement constitué
par un mélange : a) de résidus de traitement de minerais contenant au moins
5 % de silico-aluminate de sodium et au moins 20 % d'oxydes de fer et : b)
de produit renfermant de la chaux libre.

Des mélanges convenant particulièrement bien selon l'inven-

tion sont ceux constitués par : les boues rouges, résidu.... du de la bauxite pour la fabrication d'alumine et, en ce qui co... les produits à chaux libre, par des cendres sulfocalciques de centrale thermique ayant une teneur d'au moins 20 % sur $SiO_2$, 30 % en CaO (dont une partie en chaux libre) et 10 % en $Al_2O_3$.

On sait que ces deux catégories de sous-produits industriels constituent des masses fort importantes de déchets qui encombrent les terrils ou qu'il est nécessaire, dans les cas des boues rouges, de stocker dans les fosses spécialement aménagées. Or, il a été trouvé que, grâce notamment à la chaux libre contenue généralement dans les cendres volantes sulfocalciques de centrale thermique, on peut confectionner d'excellents liants par mélange de ces cendres avec les boues rouges. Par exemple, des liants de faible coût et de très bonnes caractéristiques mécaniques ont été obtenus à partir des cendres volantes de la centrale thermique de GARDANNE (Sud de la France) ainsi que des pâtes de boues rouges actuellement rejetées comme déchets par les groupes métallurgiques en divers lieux d'exploitation. Lorsqu'on sait que ces boues rouges représentent une masse annuelle de plusieurs millions de tonnes, uniquement en France, on mesure tout l'intérêt du nouveau liant selon l'invention qui autorise une inespérée valorisation de tels résidus.

Les proportions respectives des deux constituants essentiels du liant peuvent varier entre de larges limites et généralement entre 10 et 90 % de produit à chaux libre pour 90 à 10 % de résidus riches en oxydes de fer comme par exemple les boues rouges. Les résistances à la compression et à la traction des liants obtenus, ainsi que le rapport Rt/Rc, sont déjà corrects pour des proportions respectives : 10 % de cendres - 90 % de boue rouge (par exemple) mais ils deviennent très importants pour des taux de 40/60 ou 50/50. Il existe donc une progressivité de caractéristiques mécaniques, ainsi d'ailleurs que des temps de prise, qui autorisent beaucoup de souplesse dans la mise en oeuvre.

Selon une autre caractéristique et une variante de l'invention, on peut avantageusement ajouter aux mélanges ci-dessus une petite proportion d'un agent activant apte à donner plus rapidement, par exemple après 14 ou 28 jours, des résistances plus élevées. Parmi ces activants on peut citer tout particulièrement la silice activée ou encore de l'alumine activée. Peuvent également convenir d'autres accélérateurs tels que le phosphogypse, le sulfate de calcium anhydre ou composés analogues. En pratique, la proportion d'activant par rapport au mélange total de boues rouges et de produit riche en chaux peut avantageusement varier entre 1 et 40 par- ties (pour 100 parties en poids de mélange).

Selon une autre variante, on peut encore améliorer les caractéristiques du liant selon l'invention en ajoutant au mélange de boues rouges et de chaux (ou produit en renfermant) du laitier granulé métallurgique ou sidérurgique, soit sous la forme de granules de dimensions 0 à 5 mm soit encore sous la forme de laitier broyé ou moulu tel que par exemple du laitier broyé ayant au moins 10 % (de préférence 40 à 50 %) de particules passant au tamis de 80 microns et moins de 10 % de particules de diamètre 200 microns. On peut ainsi mélanger 20 à 90 parties (en poids) de mélange de boues rouges plus chaux avec 80 à 10 parties de laitier, selon le type et la finesse de ce dernier ; la proportion de chaux libre étant au moins égale à 10 % en poids du mélange.

En pratique, la fabrication du liant s'effectue simplement à froid dans un malaxeur classique type travaux publics, contrairement au cas de nombreux liants dont par exemple des ciments où la préparation à haute température exige de grandes dépenses d'énergie. La chaux ou le produit riche en chaux tel que par exemple la cendre sulfocalcique, ainsi que éventuellement l'agent activant et le laitier sont incorporés sous forme de matériaux pulvérulents secs alors que les boues rouges sont utilisées avec leur teneur en eau habituelle, après décantation primaire. L'eau supplémentaire nécessaire à la confection du liant est ajoutée au mélange au cours de malaxage.

Les liants obtenus se prêtent à de nombreuses et importantes utilisations telles que, en particulier : la fabrication de matériaux de construction comme des parpaings, des briques, des tuiles pour lesquelles la couleur rouge des boues convient particulièrement bien et permet la suppression de pigments; la construction de routes par incorporation aux graviers et cailloux ; la stabilisation et la consolidation de sols...etc. En général, la proportion de liant utilisée pour la plupart des applications est maintenue entre les limites de 5 à 50 %, le plus souvent entre 15 et 20 %.

En outre, selon un perfectionnement de l'invention, il s'avère parfois avantageux d'ajouter au liant un produit servant de matériau de remplissage et apte à amener des caractéristiques telles que : légèreté, isolation phonique ou autres propriétés intéressantes. A cet effet, on peut utiliser par exemple des résidus tels que des boues de papeterie riches en $CaCO_3$, des cendres volantes silicoalumineuses, que l'on peut ainsi valoriser.

L'invention est illustrée ci-après par des exemples non

limitatifs mettant en évidence des compositions pour le nouveau liant et les caractéristiques obtenues dans une application donnée.

EXEMPLES.

On a préparé des séries de compositions par mélange à froid en malaxeur, de proportions diverses de cendres pulvérulentes de la centrale thermique de GARDANNE (France) et de boues rouges obtenues par décantation des déchets de traitement de bauxite rejetés à GARDANNE par l'usine d fabrication d'alumine.

La composition des cendres était la suivante : CaO : 36 à 4 % (dont 10 à 25 % de chaux libre) ; $SiO_2$ ; 27 à 32 % ; $Al_2O_3$ : 10 à 16 % : $Fe_2O_3$ , MgO, $SO_3$ : 13 à 20 %.

La composition des boues rouges utilisées était du type : Silicoaluminate de Sodium : 35 % ; oxyde de fer : 43 % ; oxyde d'aluminium monohydraté 6 % ; $TiO_2$ 5 % ; aluminate tricalcique 3 % ; carbonate de Ca : 6 à 7 % ; traces de titano-aluminate de sodium ; eau liée à $Al_2O_3$ , CaO ou $Fe_2O_3$ : 0,3 %.

On a ensuite mesuré un certain nombre de caractéristiques des liants obtenus, dont les propriétés mécaniques. Les résultats obtenus sont consignés dans le tableau 1 qui suit :

## Tableau 1

Composition % en poids

| | | | | | |
|---|---|---|---|---|---|
| Cendres | 10 % | 20 % | 30 % | 40 % | 50 % | 60 % |
| Boues rouges | 90 % | 80 % | 70 % | 60 % | 50 % | 40 % |

Propriétés mécaniques
(résistances en bars)

| | | | | | | |
|---|---|---|---|---|---|---|
| RC 7 jours | 30 | 46 | 88 | 139 | 185 | 225 |
| 14 jours | 44 | 59 | 114 | 155 | 212 | 303 |
| 28 jours | 58 | 72 | 127 | 182 | 256 | 368 |
| 90 jours | 75 | 92 | 140 | 210 | 275 | 392 |
| Rt 7 jours | 9 | 13,5 | 23 | 31,4 | 40 | 55 |
| 14 jours | 11 | 15,4 | 29,4 | 39 | 51 | 80 |
| 28 jours | 14,5 | 18,7 | 31,4 | 42 | 72,3 | 85,5 |
| 90 jours | 16 | 20 | 35 | 47 | 75 | 92 |

Comme on peut le voir, les résistances montrent une p

0010472

gression en fonction du temps qui est avantageusement mise à profit lors de la mise en œuvre. Elles atteignent déjà après 28 jours et surtout après 90 jours des valeurs élevées, les rapports Rt/Rc étant toujours nettement supérieurs à la valeur moyenne de 1/10, caractéristique des liants hydrauliques connus.

Ces résistances sont encore plus élevées lorsqu'on ajoute aux compositions un activant comme par exemple de la silice activée et/ou du laitier en grains fins comme précisé ci-avant.

# REVENDICATIONS

1. Liant hydraulique caractérisé en ce qu'il est constitué par un mélange : a) de résidus de traitement de minerais contenant au moins 5 % de silico-aluminate de sodium et au moins 20 % d'oxydes de fer ; et b) de produit renfermant de la chaux libre.

2. Liant selon la revendication 1, caractérisé en ce que les résidus de traitement sont constitués par les boues rouges rejetées après fabrication de l'alumine à partir de bauxite.

3. Liant selon l'une quelconque des revendications 1 ou 2, caractérisé en ce que le produit b) est constitué par de la chaux.

4. Liant selon l'une quelconque des revendications 1 ou 2, caractérisé en ce que le produit b) est constitué par des cendres volantes sulfocalciques de centrale thermique ayant une teneur d'au moins 20 % en $SiO_2$, 30 % en CaO (dont une partie en chaux libre) et 10 % en $Al_2O_3$.

5. Liant selon l'une quelconque des revendications 1 à 4, caractérisé en ce que les proportions respectives des constituants a/ et b/ varient entre 10 et 90 % pour le premier et 90 à 10 % pour le second.

6. Liant selon l'une quelconque des revendications 1 à 5, caractérisé en ce qu'il renferme en outre 1 à 40 parties en poids (pour 100 parties dudit mélange) d'un agent activant la prise, choisi dans le groupe : silice activée, alumine activée, phosphogypse, sulfate de calcium anhydre.

7. Liant selon l'une quelconque des revendications 1 à 6, caractérisé en ce qu'il contient également 10 à 80 parties en poids, pour 20 à 90 parties dudit mélange, de laitier métallurgique ou sidérurgique sous forme granulée ou broyée comportant au moins 10 %, de préférence 40 à 50 %, de particules passant au tamis de 80 microns et moins de 10 % de particules de diamètre supérieur à 200 microns, la proportion de chaux libre restant au moins égale à 10 % en poids du mélange.

8. Liant selon l'une quelconque des revendications 1 à 7, caractérisé en ce qu'il peut contenir en outre un matériau de remplissage tel que notamment : des boues de papeterie riches en $CaCO_3$, des cendres volantes silico-alumineuses ou autres résidus.

9. Application du liant selon l'une quelconque des revendications 1 à 8 à la fabrication de matériaux de construction dont parpaings, briques, tuiles; à la construction de routes, à la stabilisation et à la consolidation de sols et analogues, la proportion de liant par rapport aux ajouts étant comprise entre 5 et 50 %, généralement entre 15 et 20 %.